# EUROPÄISCHE PATENTSCHRIFT

(11) **EP 0 994 450 B1**
(45) Veröffentlichungstag und Bekanntmachung des Hinweises auf die Patenterteilung: **22.11.2006**
(21) Anmeldenummer: 99119691.6
(22) Anmeldetag: 05.10.1999
(51) Int. Cl.: G08G 1/0968, G01C 21/20, G01C 21/26, G01C 21/34, G01C 21/36

(54) **Navigationsverfahren und Navigationsgerät für Fortbewegungsmittel**
Navigation system and device for a means of locomotion
Procédé et appareil de navigation pour moyen de locomotion

(30) Priorität: 16.10.1998 DE 19847754
(43) Veröffentlichungstag der Anmeldung: 19.04.2000
(73) Patentinhaber: ROBERT BOSCH GMBH, 70442 Stuttgart (DE)
(72) Erfinder: Black, Karl-Heinz, 31139 Hildesheim (DE); Fricke, Walter, 31162 Bad Salzdetfurth (DE); Heidekrueger, Peter, 31135 Hildesheim (DE)

(56) Entgegenhaltungen:
- US-A- 5 635 953
- US-A- 5 765 123

## Beschreibung

### Technisches Gebiet

Die Erfindung betrifft ein Navigationsverfahren für ein Fortbewegungsmittel, insbesondere für ein Fahrzeug, Kraftfahrzeug, Schiff oder Flugzeug, zur Navigation von einem Standort zu einem Zielort, wobei der Zielort und ggf. der Standort in ein Navigationssystem eingegeben werden, gemäß dem Oberbegriff des Anspruchs 1. Die Erfindung betrifft ferner ein Navigationssystem für ein Fortbewegungsmittel, insbesondere für ein Fahrzeug, Kraftfahrzeug, Schiff oder Flugzeug, zur Navigation von einem Standort zu einem Zielort, wobei eine Eingabevorrichtung zur Eingabe von Zielorten und ggf. Standorten vorgesehen ist, gemäß dem Oberbegriff des Anspruchs 6.

### Stand der Technik

In Fortbewegungsmitteln, wie beispielsweise Kraftfahrzeugen, Flugzeugen oder Schiffen, leiten fest installierte Navigationssysteme einen Führer des Fortbewegungsmittels schnell, einfach und sicher von einem aktuellen Standort zu einem gewünschten Zielort, ohne dass der Führer des Fortbewegungsmittels vorher aufwendig eine Route planen und entsprechendes Kartenmaterial erwerben muss. Hierzu liegen entsprechende, beispielsweise auf Karten, Landkarten oder Straßenkarten basierende, Navigationsdaten in dem Navigationssystem beispielsweise auf CD-ROM gespeichert vor. Das Navigationsgerät nutzt beispielsweise GPS (Global Positioning System) um einen momentanen Standort festzustellen und entsprechende Navigationsanweisungen zu berechnen, welche zu einem vorbestimmten Ziel führen. Die Navigationsdaten behalten dabei vorzugsweise Daten über Strassen und Wege für Kraftfahrzeuge.

Bevor jedoch das Navigationssystem seine Aufgabe übernehmen und eine Route vom Standort zum Zielort berechnen kann, ist es notwendig, dass ein Benutzer den gewünschten Zielort und gegebenenfalls bei Navigationsgeräten ohne GPS auch den aktuellen Standort eingibt. Dies erfolgt beispielsweise über ein manuell zu betätigendes Eingabegerät, wobei Buchstaben einer Zeichentabelle aufeinander folgend aufgerufen bzw. gescrollt und ausgewählt werden, bis die ausgewählten Buchstaben und Ziffern beispielsweise einen Ortsnamen, einen Straßennamen und eine Hausnummer eines Zielorts bzw. eines Standorts bilden. Dies ist jedoch umständlich sowie zeitraubend und erfordert gewisse Grundkenntnisse bei der Bedienung des Navigationssystems.

US-A-5 635 953 offenbart ein Verfahren zur Eingabe eines Navigationsziels durch Eingabe einer Telefonnummer, wobei auf die Eingabe der Telefonnummer über eine numerische Tastatur aus einem Telefonnummernspeicher der eingegebenen Telefonnummer zugeordnete Ortskoordinaten als Navigationsziel bestimmt werden. Der Telefonnummernspeicher kann unter anderem als CD-ROM ausgeführt sein.

US-A-5 765 123 offenbart ein vergleichbares Zieleingabe-Verfahren.

EP-A-0701926 offenbart eine Multifunktions-Bedieneinrichtung zur Bedienung verschiedener Funktionen eines Kraftfahrzeugs, insbesondere von Funktionen zur Fahrerinformation, daneben aber auch zur Klimatisierung des Fahrzeuginnenraums. Es ist dabei eine Frontkappe eines Kombinationsgeräts, wie es in an sich bekannter Weise in genormten Einbauschächten in Mittelkonsolen oder Armaturenbrettern von Kraftfahrzeugen verbaut wird gezeigt.

Die DE-A-19807410 offenbart ebenfalls eine vergleichbare Multifunktionseinrichtung, die gegenüber der vorgenannten EP-A-0701926 zusätzlich über eine alphanumerische Tastatur verfügt.

### Darstellung der Erfindung, Aufgabe, Lösung, Vorteile

Es ist Aufgabe der vorliegenden Erfindung, ein alternatives Navigationsverfahren und Navigationssystem der oben genannten Art zur Verfügung zu stellen.

Diese Aufgabe wird durch ein Navigationsverfahren der oben genannten Art mit den in Anspruch 1 gekennzeichneten Merkmalen und durch ein Navigationssystem der oben genannten Art mit den in Anspruch 5 gekennzeichneten Merkmalen gelöst.

Dazu ist es bei einem Verfahren der oben genannten Art vorgesehen, dass zur Eingabe des Zielorts und gegebenenfalls des Standorts eine Nummer eingegeben und eine dieser Nummern zugeordnete Adresse aus einem zusätzlichen Speicher ausgelesen und als Zielort bzw. Standort an das Navigationssystem übertragen wird.

Dies hat den Vorteil, dass durch einfache Nummerneingabe, d.h. mit lediglich 10 unterschiedlichen Zeichen einer Zehnertastatur am Navigationssystem Zielortdaten vollständig eingegeben werden können, ohne umständlich Zielortdaten, wie beispielsweise Ortsname, Straßenname und Hausnummer, Buchstabe für Buchstabe aus einer Zeichentabelle sukzessive auswählen zu müssen.

Dabei wird erfindungsgemäß die Nummer Über eine externe Zehnertastatur oder über eine numerische Eingabevorrichtung eines mit dem Navigationssystem verbundenen Autoradios oder CD-Spielers eingegeben.

Vorzugsweise Weitergestaltungen des Navigationsverfahrens sind in den Ansprüchen 2 bis 4 beschrieben.

In einer bevorzugten Ausführungsform ist die Nummer eine Telefonnummer eines Telefons am Zielort bzw. eines Telefons am Standort und es wird eine dieser Telefonnummer zugeordnete Adresse aus einem Telefonlisten-Speicher ausgelesen und als Zielort bzw. Standort an das Navigationssystem übertragen.

Beispielsweise enthält der zusätzliche Speicher eine direkte Zuordnung von Adressen zu Nummern, wobei in einer besonders bevorzugten Ausführungsform eine CD-ROM als zusätzlicher Speicher verwendet wird.

Bei einem Navigationssystem der o.g. Art ist es vorgesehen, dass die Eingabevorrichtung eine numerische Tastatur zur Eingabe von Nummern umfasst, wobei ferner ein zusätzlicher Speicher vorgesehen ist, welcher eine Zuordnung von Nummern zu Adressen enthält.

Dies hat den Vorteil, dass eine vereinfachte Eingabe am Navigationssystem möglich ist, wobei lediglich durch Eingabe von Nummern ohne umständliche Buchstabenauswahl aus einer Zeichentabelle Zielortdaten bzw. Standortdaten eingebbar sind. Diese Daten können durch einfache Nummerneingabe, d.h. mit lediglich 10 unterschiedlichen Zeichen einer Zehnertastatur am Navigationssystem, vollständig eingegeben werden, ohne umständlich Zielortdaten, wie beispielsweise Ortsname, Straßenname und Hausnummer, Buchstabe für Buchstabe und Ziffer für Ziffer aus einer Zeichentabelle sukzessive auswählen zu müssen.

Dabei ist die numerische Tastatur erfindungsgemäß eine externe Zehnertastatur oder eine numerische Eingabevorrichtung eines mit dem Navigationssystem verbundenen Autoradios oder CD-Spielers.

Vorzugsweise Weitergestaltungen des Navigationssystems sind in den Ansprüchen 6 bis 7 beschrieben.

Einen besonders einfachen und intuitive bedienbaren Zugang zu den Daten des zusätzlichen Speichers erzielt man dadurch, dass die Nummern Telefonnummern sind.

In einer besonders bevorzugten Ausführungsform ist der zusätzliche Speicher eine CD-ROM, wobei im dem Falle, dass die Nummern Telefonnummern sind zweckmäßigerweise eine Telefonlisten-CD-ROM zum Einsatz kommt, welche bereits Zuordnungen von Telefonnummern zu Adressen enthält.

### Kurze Beschreibung der Zeichnungen

Nachstehend wird die Erfindung anhand der beigefügten Zeichnungen näher erläutert. Diese zeigen in
- Fig. 1: eine erste bevorzugte Ausführungsform eines erfindungsgemäßen Navigationssystems in einer schematisch/perspektivischen Darstellung,
- Fig. 2a: eine zweite bevorzugte Ausführungsform eines erfindungsgemäßen Navigationssystems in einer schematisch/perspektivischen Darstellung,
- Fig. 2b: eine dritte bevorzugte Ausführungsform eines erfindungsgemäßen Navigationssystems in einer schematisch/perspektivischen Darstellung und
- Fig. 3: eine vierte bevorzugte Ausführungsform eines erfindungsgemäßen Navigationssystems in einer schematisch/perspektivischen Darstellung.

### Bester Weg zur Ausführung der Erfindung

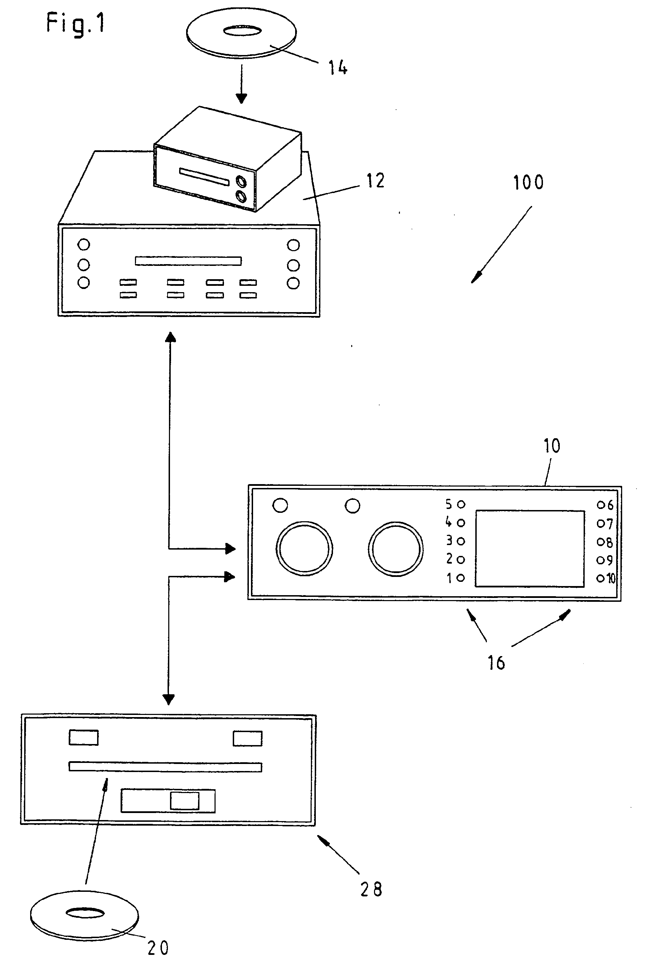

Die in Fig. 1 dargestellte erste bevorzugte Ausführungsform eines erfindungsgemäßen Navigationssystems 100 umfasst ein Autoradio 10, welches zur Steuerung einer externen Navigationseinheit 28 ausgebildet ist, und einen mit dem Autoradio 10 verbundenen CD-Wechsel 12. In einem nicht dargestellten CD-Laufwerk der externen Navigationseinheit 28 befindet sich eine Navigations-CD. In dem CD-Wechsel 12 ist als zusätzlicher Speicher eine Telefonlisten-CD-ROM 14 in einem festen oder zugewiesenen Platz vorgesehen. Das Autoradio 10 umfasst ferner eine Zehnertastatur 16, über die eine Telefonnummer eines Telefons, beispielsweise an einem gewünschten Zielort, eingebbar ist. Über das Autoradio 10 liest daraufhin die externe Navigationseinheit 28 aus der Telefonlisten-CD-ROM 14 eine der eingegebenen Telefonnummer zugeordnete Adresse aus und konvertiert diese mittels der Navigations-CD 20 zu Zielortdaten für eine nachfolgende Routenberechnung.

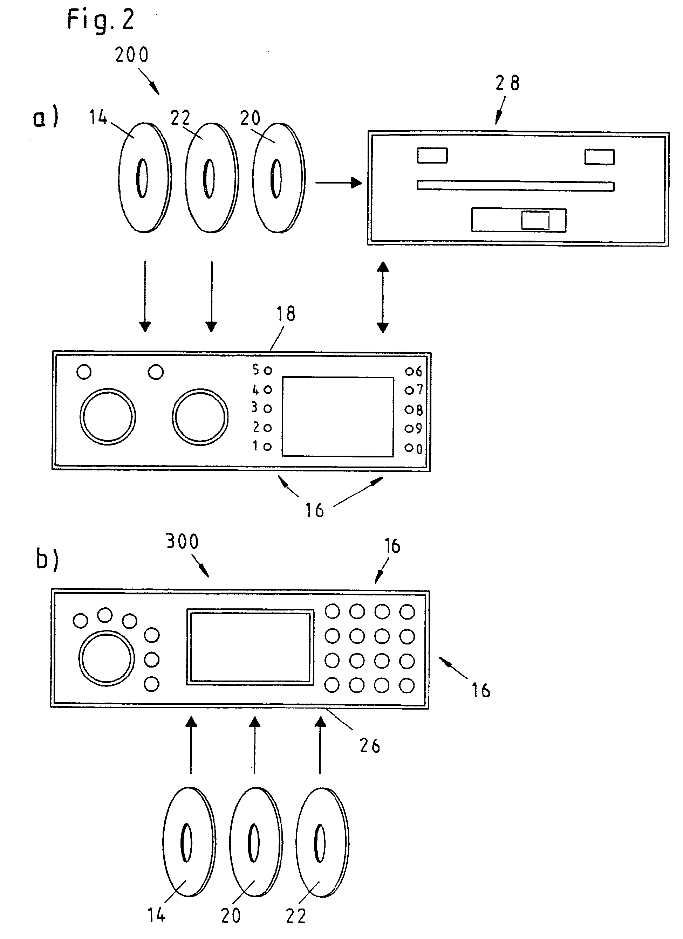

Die in Fig. 2a dargestellte zweite bevorzugte Ausführungsform eines erfindungsgemäßen Navigationssystems 200 umfasst statt des externen CD-Wechslers 12 gemäß der ersten Ausführungsform 100 ein Autoradio 18 mit internem CD-Laufwerk, in das alternativ eine Audio-CD-ROM 22 oder die Telefonlisten-CD-ROM 14 eingelegt ist. Zweckmäßigerweise ist hierzu das CD-Laufwerk des Autoradios 18 mit einem nicht dargestellten automatischen CD-Wechsler ausgestattet. Zur Eingabe einer Telefonnummer ist wiederum eine Zehnertastatur 16 am Autoradio 18 vorgesehen.

Die in Fig. 2b dargestellte dritte bevorzugte Ausführungsform eines erfindungsgemäßen Navigationssystems 300 entspricht der Ausführungsform 200 von Fig. 2a mit dem Unterschied, dass ein Autoradio 26 mit integriertem Navigationssystem und vorgesehen ist, so dass im Gegensatz zur Ausführungsform 200 von Fig. 2a die externe Navigationseinheit 28 entfällt.

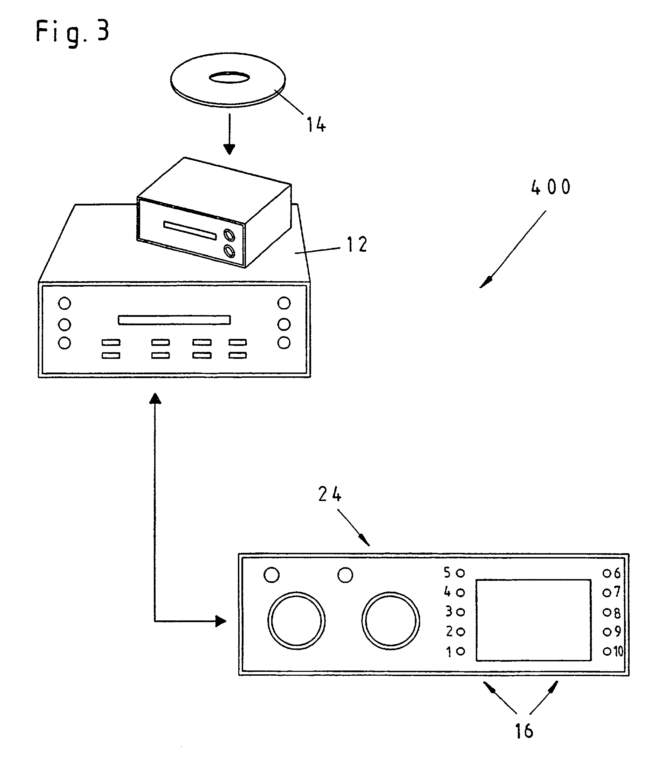

Die in Fig. 3 dargestellte vierte bevorzugte Ausführungsform eines erfindungsgemäßen Navigationssystems 400 entspricht der Ausführungsform 100 von Fig. 1 mit dem Unterschied, dass ein Autoradio 24 mit integriertem Navigatinossystem vorgesehen ist, so dass im Gegensatz zur Ausführungsform 100 von fig. 1 die externe Navigationseinheit 28 entfällt.

Nachfolgend erfolgt eine nähere Erläuterung des erfindungsgemäßen Navigationsverfahrens, wobei diese Erläuterungen für alle vorgenannten Ausführungsbeispiele gleichermaßen gültig sind. Als Telefonlisten-CD-ROM kommt vorzugsweise eine handelsübliche Telefon-CD zum Einsatz. Es liegt jedoch auch im Umfang der Erfindung, dass stattdessen ein zusätzlicher Speicher vorgesehen ist, welcher eine Zuordnung von Nummern zu Adressen enthält. In diesem Falle sind dann nicht notwendigerweise Telefonnummern einzugeben. Vielmehr wählt ein Benutzer einen gewünschten Zielort bzw. Standort aus einer ihm beispielsweise als Ausdruck vorliegenden Liste aus und gibt eine in der Liste angegebene Nummer für diesen Ort ein. Derartige Nummern könnten auch beispielsweise in speziell dafür vorgesehenen Land- bzw. Straßenkarten eingedruckt sein.

Im weiteren wird von der Eingabe von Telefonnummern und einer Verwendung einer Telefonlisten-CD-ROM ausgegangen, wobei dies lediglich beispielhaft zu verstehen ist. Auf handelsüblichen Telefon-CD's befindet sich bereits eine Zuordnung von Telefonnummern zu jeweiligen Adressen. Erfindungsgemäß wird eine derartige Telefonliste in eine Ziel- und/oder Standorteingabe für ein Navigationssystem eingebunden, so dass eine Ziel- und/oder Standorteingabe über die Eingabe einer Telefonnummer eines Telefons am gewünschten Ort möglich ist. Die erforderlichen Ortsdaten, wie beispielsweise Ortsname, Straßenname und Hausnummer, sind vollständig aus der Telefonliste verfügbar und anhand der eingegebenen Telefonnummer in dem zusätzlichen Speicher in Form der Telefonlisten-CD-ROM auffindbar. Diese Ortsdaten werden von dem Navigationssystem nach Eingabe der entsprechenden Telefonnummer als Ziel- und/oder Standortposition übernommen. Es ergibt sich sofort, dass erfindungsgemäß für die Ziel- bzw. Standorteingabe eine einfache Zehnertastatur 16 oder eine numerische Eingabevorrichtung eines im Navigationssystem eingebunden Gerätes, wie beispielsweise eines Autoradios oder CD-Spielers, vollkommen ausreichend ist.

Der Navigationsprozessor ruft nach Eingabe der Telefonnummer durch einen Benutzer, beispielsweise über die Zehnertastatur 16, von der Telefon-CD 14 die zu der eingegebenen Telefonnummer gehörige Adresse auf und übernimmt die vollständige Adresse, die dann gleichzeitig über ein Display angezeigt wird. Nach Bestätigung durch den Anwender wird die Adresse als Zieladresse oder Standortadresse übernommen.

Die für das erfindungsgemäße Verfahren beispielhaft erforderliche CD-ROM 14 mit der Telefonliste ist beispielsweise einem festen oder zugewiesenen Platz im vorhandenen CD-Wechsler zugeordnet. Die erforderlichen Daten werden bei Bedarf vom Navigationsprozessor abgerufen. Hierzu ist beispielsweise das CD-Laufwerk des Navigationssystems mit einem automatischen CD-Wechsler ausgestattet, wobei wahlweise vom Navigationsprozessor gesteuert auf die CD-ROM 14 mit der Telefonliste oder auf die Navigationsdaten-CD-ROM 20 zugegriffen wird.

## Patentansprüche

1. Navigationsverfahren für ein Fortbewegungsmittel, insbesondere für ein Fahrzeug, Kraftfahrzeug, Schiff oder Flugzeug, zur Navigation von einem Standort zu einem Zielort, wobei der Zielort und ggf. der Standort in ein Navigationssystem eingegeben werden, wobei zur Eingabe des Zielortes und ggf. des Standortes eine Nummer eingegeben und eine dieser Nummer zugeordnete Adresse aus einem zusätzlichen Speicher ausgelesen und als Zielort bzw. Standort an das Navigationssystem übertragen wird, wobei die Nummer über eine bezüglich des Navigationssystems externe Zehnertastatur oder über eine bezüglich des Navigationssystems externe numerische Eingabevorrichtung eines mit dem Navigationssystem verbundenen Autoradios oder CD-Spielers eingegeben wird.

2. Navigationsverfahren nach Anspruch 1, **dadurch gekennzeichnet, dass** die Nummer eine Telefonnummer eines Telefons am Zielort bzw. eines Telefons am Standort ist und eine dieser Telefonnummer zugeordnete Adresse aus einem Telefonlisten-Speicher ausgelesen und als Zielort bzw. Standort an das Navigationssystem übertragen wird.

3. Navigationsverfahren nach Anspruch 1 oder 2, **dadurch gekennzeichnet, dass** der zusätzliche Speicher eine direkte Zuordnung von Adressen zu Nummern enthält.

4. Navigationsverfahren nach einem der vorhergehenden Ansprüche, **dadurch gekennzeichnet, dass** als zusätzlicher Speicher eine CD-ROM verwendet wird.

5. Navigationssystem (100, 200, 300, 400) für ein Fortbewegungsmittel, insbesondere für ein Fahrzeug, Kraftfahrzeug, Schiff oder Flugzeug, zur Navigation von einem Standort zu einem Zielort, wobei eine Eingabevorrichtung zur Eingabe von Zielorten und ggf. Standorten vorgesehen ist, wobei die Eingabevorrichtung eine numerische Tastatur (16) zur Eingabe von Nummern umfasst, wobei ferner ein zusätzlicher Speicher (14) vorgesehen ist, welcher eine Zuordnung von Nummern zu Adressen enthält und wobei die numerische Tastatur eine bezüglich des Navigationssystems externe Zehnertastatur oder eine bezüglich des Navigationssystems externe numerische Eingabevorrichtung (16) eines mit dem Navigationssystem (100, 200, 300,400) verbundenen Autoradios (10,18,24, 26) oder CD-Spielers ist.

6. Navigationssystem (100,200, 300, 400) nach Anspruch 5, **dadurch gekennzeichnet, dass** die Nummern Telefonnummern sind.

7. Navigationssystem (100, 200, 300, 400) nach Anspruch 5 oder 6, **dadurch gekennzeichnet, dass** der zusätzliche Speicher eine CD-ROM (14), insbesondere eine Telefonlisten-CD-ROM, ist.

## Claims

1. Navigation method for a means of locomotion, in particular for a vehicle, motor vehicle, ship or aircraft, for navigating from one location to a destination, the destination and, if appropriate, the location being input into a navigation system, a number being input in order to input the destination and, if appropriate, the location, and an address which is assigned to this number being read out of an additional memory and transmitted as a destination or location to the navigation system, the number being input by means of a ten-key keypad which is external to the navigation system or by means of a numeric input device which is external to the navigation system, of a car radio or CD player which is connected to the navigation system.

2. Navigation method according to Claim 1, **characterized in that** the number is a telephone number of a telephone at the destination or of a telephone at the location, and an address which is assigned to this telephone number is read out of a telephone list memory and transmitted as a destination or location to the navigation system.

3. Navigation method according to Claim 1 or 2, **characterized in that** the additional memory contains a direct assignment of addresses to numbers.

4. Navigation method according to one of the preceding claims, **characterized in that** a CD-ROM is used as an additional memory.

5. Navigation system (100, 200, 300, 400) for a means of locomotion, in particular for a vehicle, motor vehicle, ship or aircraft, for navigating from one location to a destination, an input device being provided for inputting destinations and, if appropriate, locations, the input device comprising a numeric keypad (16) for inputting numbers, an additional memory (14) which contains an assignment of numbers to addresses also being provided, and the numeric keypad being a ten-key keypad which is external to the navigation system or a numeric input device (16) which is external to the navigation system, of a car radio (10, 18, 24, 26) or CD player which is connected to the navigation system (100, 200, 300, 400).

6. Navigation system (100, 200, 300, 400) according to Claim 5, **characterized in that** the numbers are telephone numbers.

7. Navigation system (100, 200, 300, 400) according to Claim 5 or 6, **characterized in that** the additional memory is a CD-ROM (14), in particular a telephone list CD-ROM.

## Revendications

1. Procédé de navigation pour un moyen de transport notamment un véhicule, un véhicule automobile, un navire, un avion, pour naviguer entre un point de départ et une destination, la destination et le cas échéant le point de départ étant introduits dans le système de navigation, selon lequel
pour introduire la destination et le cas échéant le point de départ on introduit un numéro et on extrait une adresse associée à ce numéro d'une mémoire supplémentaire et on la transmet comme destination ou comme point de départ au système de navigation,
le numéro étant introduit par un clavier décimal externe au système de navigation ou par un dispositif d'entrée numérique externe au système de navigation d'un auto-radio ou d'un lecteur de disques CD relié au système de navigation.

2. Procédé de navigation selon la revendication 1,
**caractérisé en ce que**
le numéro est le numéro de téléphone d'un point de destination ou d'un téléphone du point de départ et une adresse associée à ce numéro de téléphone est extraite d'une mémoire de liste téléphonique et est transmise comme destination ou comme point de départ au système de navigation.

3. Procédé de navigation selon la revendication 1 ou 2,
**caractérisé en ce que**
la mémoire supplémentaire comporte une association directe entre les adresses et les numéros.

4. Procédé de navigation selon une des revendications précédentes,
**caractérisé en ce que**
la mémoire supplémentaire est un disque CD ROM.

5. Système de navigation (100, 200, 300, 400) pour un moyen de transport notamment un véhicule, un véhicule automobile, un bateau ou un navire pour naviguer entre un point de départ et une destination, avec un dispositif d'entrée prévu pour introduire des destinations et le cas échéant des points de départ, dans lequel
le dispositif d'entrée a un clavier numérique (16) pour introduire des numéros, et utilise en outre une mémoire supplémentaire (14) contenant l'association entre les numéros et les adresses,
le clavier numérique étant un clavier décimal externe au système de navigation ou un dispositif d'entrée numérique (16) externe au système de navigation d'un auto-radio (10, 18, 24, 26) ou d'un lecteur de disques CD relié au système de navigation (100, 200, 300, 400).

6. Système de navigation (100, 200, 300, 400) selon la revendication 5,
**caractérisé en ce que**
les numéros sont des numéros de téléphone.

7. Système de navigation (100, 200, 300, 400) selon la revendication 5 ou 6,
**caractérisé en ce que**
la mémoire supplémentaire est un disque CD-ROM (14) notamment un disque CD-ROM d'une liste de téléphone.
